# EUROPÄISCHE PATENTSCHRIFT

(11) **EP 3 875 246 B1**
(45) Veröffentlichungstag und Bekanntmachung des Hinweises auf die Patenterteilung: **29.06.2022**
(21) Anmeldenummer: 20161489.8
(22) Anmeldetag: 06.03.2020
(51) Int. Cl.: B29C 51/20, B29C 51/24, B29C 51/42, B29K 29/00, B29L 31/00, B29C 51/26, B65B 9/00, C11D 17/04, B29C 51/10

(54) **TIEFZIEHVORRICHTUNG, VERPACKUNGSMASCHINE MIT EINER TIEFZIEHVORRICHTUNG UND VERFAHREN ZUM BETRIEB DER TIEFZIEHVORRICHTUNG**
DEEP-DRAWING DEVICE, PACKAGING MACHINE WITH A DEEP-DRAWING DEVICE AND METHOD FOR OPERATING THE DEEP-DRAWING DEVICE
DISPOSITIF D'EMBOUTISSAGE, MACHINE D'EMBALLAGE DOTÉ D'UN DISPOSITIF D'EMBOUTISSAGE ET PROCÉDÉ DE FONCTIONNEMENT DU DISPOSITIF D'EMBOUTISSAGE

(43) Veröffentlichungstag der Anmeldung: 08.09.2021
(73) Patentinhaber: Harro Höfliger Verpackungsmaschinen GmbH, 71573 Allmersbach im Tal (DE)
(72) Erfinder: Egelkraut, Udo, 71573 Allmersbach im Tal (DE); Schneider, Jan, 71573 Allmersbach im Tal (DE); Thienst, Andreas, 71573 Allmersbach im Tal (DE)
(74) Vertreter: Zurhorst, Stefan

(56) Entgegenhaltungen:
- EP-A1- 3 390 234
- US-A- 4 883 419
- US-A1- 2004 000 128

## Beschreibung

Die Erfindung betrifft eine Tiefziehvorrichtung mit den Merkmalen nach dem Oberbegriff des Anspruchs 1, eine Verpackungsmaschine zur Herstellung von gefüllten Beuteln mit einer solchen Tiefziehvorrichtung sowie ein Verfahren zum Betrieb der Tiefziehvorrichtung.

EP3390234A1 offenbart eine Tiefziehvorrichtung nach dem Oberbegriff des Anspruchs 1 und eine entsprechende Verpackungsmaschine und ein entprechendes Verfahren.

In verbreiteter Ausführung werden Verpackungseinheiten häufig dadurch hergestellt, dass zunächst Folien tiefgezogen werden. In die hierbei entstehenden Kavitäten wird ein Produkt eingefüllt, woran anschließend eine Versiegelung mit einer Deckfolie erfolgt. Es entsteht ein doppellagiger Folienstreifen, in dem Teilmengen des Produktes voneinander abgegrenzt sind. Diese Teilmengen werden abschließend in einer Schneidstation vereinzelt.

Insbesondere im Haushaltsbereich werden in vorgenannter Weise Einzeldosen von Wasch- oder Spülmittel mittels zweier Bahnen von wasserlöslicher Folie verpackt. Für die industrielle Massenfertigung kommen Verpackungsmaschinen in einem kontinuierlichen, nicht getakteten Betrieb zum Einsatz. Hierbei läuft ein Transporteur beispielsweise in Form einer Kette kontinuierlich um ein feststehendes Maschinengestell um, wobei der Transporteur auf der oberen Bearbeitungsseite eine geradlinige, horizontale Wegstrecke zurücklegt. Gemeinsam mit dem Transporteur werden sogenannte Formatplatten kontinuierlich umlaufend mitbewegt. Synchron zur Bewegung der Formatplatten wird eine erste Folienbahn kontinuierlich zugeführt und auf die Oberseite der Formatplatten aufgelegt. In den Formatplatten sind mehrere Formmulden ausgeformt, die für den Tiefziehvorgang und auch für den Vorgang des Befüllens eine zentrale Rolle spielen.

In einer vorbekannten Bauform kommt eine Tiefziehvorrichtung mit einer Formstation zum Einsatz, welche sich nur über eine Teilstrecke synchron mit der jeweiligen Formatplatte von einer Startposition zu einer Endposition mitbewegt und dann zyklisch wieder zurück zur Startposition gefahren wird. Gleichzeitig wird der Transport der Formatplatten und der Folienbahn weiter kontinuierlich aufrechterhalten. Während des Mitlaufens von der Startposition zur Endposition wird die Folienbahn zunächst auf eine solche Temperatur erwärmt, dass sie sich plastisch verformen lässt. Die solchermaßen verformbare Folie wird nun mittels eines aufgebrachten Formvakuums in die Formmulden tiefgezogen. Nach dem Tiefziehen fährt die Formstation zurück zu ihrer Startposition, um dort den nächsten Abschnitt der Folienbahn aufzuheizen und in die Formmulden einer nachfolgenden Formatplatte tiefzuziehen.

Nach Beendigung des Tiefziehvorgangs muss sichergestellt sein, dass die Folie in den Formmulden verbleibt, um das später einzufüllende Füllgut in ausreichender Menge aufnehmen zu können. Auch beim sich daran anschließenden Siegelvorgang ist es wichtig, dass die untere Folienbahn und die eingefüllten Teilmengen des Produktes an Ort und Stelle verbleiben, um eine saubere und dichte Siegelnaht erzielen zu können. Im Regelfall werden deshalb die Formmulden im Anschluss an den Tiefziehvorgang mit einem Haltevakuum beaufschlagt, welches die Folienbahn in ihrer tiefgezogenen Form hält.

Um dies zu erreichen, sind im Stand der Technik zweigeteilte Vorrichtungen zur Bereitstellung eines Vakuums bekannt. Ein erster Teil, nämlich eine örtlich feststehende Formvakuumeinrichtung befindet sich dort, wo der Tiefziehvorgang stattfindet. In Bewegungsrichtung nachfolgend befindet sich ebenfalls ortsfest der zweite Teil in Form einer Haltevakuumeinrichtung. In ihrer kontinuierlichen Bewegung gleiten die Formatplatten über beide Teile hinweg und werden über entsprechende Kanalverbindungen sequenziell zunächst mit der Formvakuumeinrichtung und dann mit der Haltevakuumeinrichtung in Verbindung gebracht. Hierüber ist es möglich, die Formmulden zunächst mit einem Formvakuum und anschließend unabhängig davon mit einem geringeren, wenngleich immer noch ausreichend hohen Haltevakuum zu beaufschlagen.

Im praktischen Betrieb sind einige Schwierigkeiten zu überwinden. Infolge der gleitenden Relativbewegung der Formatplatten relativ zu den Vakuumeinrichtungen müssen entsprechende Dichtmittel zur Verfügung gestellt werden. Trotz des hohen technischen Aufwands können an den Dichtstellen beachtliche Strömungsverluste nicht vermieden werden. Die Einstellung und Beibehaltung eines gewünschten Unterdruckniveaus ist schwierig. Auch die Übergabe von der Formvakuumeinrichtung zur Haltevakuumeinrichtung mit einem kontinuierlichen Unterdruckverlauf gestaltet sich als schwierig. Insbesondere bleibt die Produktivität der gesamten Anlage dadurch begrenzt, dass die Folie immer nur in die Formmulden einer einzigen Formatplatte tiefgezogen werden kann. Für das gleichzeitige Tiefziehen in zwei oder mehrere aufeinanderfolgende Formatplatten konnte hinsichtlich der Vakuumführung noch keine brauchbare Lösung gefunden werden.

Der Erfindung liegt die Aufgabe zugrunde, eine gattungsgemäße Tiefziehvorrichtung derart weiterzubilden, dass eine verbesserte Vakuumführung erreicht ist. Diese Aufgabe wird durch eine Tiefziehvorrichtung mit den Merkmalen des Anspruchs 1 gelöst.

Der Erfindung liegt des Weiteren die Aufgabe zugrunde, eine Verpackungsmaschine zur Herstellung von gefüllten Beuteln hinsichtlich ihrer Wirtschaftlichkeit zu verbessern. Diese Aufgabe wird durch eine Verpackungsmaschine mit den Merkmalen des Anspruchs 5 gelöst.

Schließlich liegt der Erfindung noch die Aufgabe zugrunde, ein Verfahren zum Betrieb der genannten Tiefziehvorrichtung anzugeben, welches ein verbessertes Ansaugen und Halten der Folie in den Formkavitäten ermöglicht. Diese Aufgabe wird durch ein Verfahren mit den Merkmalen des Anspruchs 7 gelöst.

Nach der Erfindung ist vorgesehen, dass ein Teil der gesamten Vakuumeinrichtung mit der Formstation zyklisch hin und her bewegt wird, und dass ein weiterer Teil ortsfest relativ zum feststehenden Maschinengestell montiert ist, wobei zwischen beiden Teilen eine teleskopartige Verbindung besteht. In genauerer Formulierung gibt es eine Formvakuumeinrichtung sowie einen nachfolgenden Haltevakuumkanal. Die Formvakuumeinrichtung ist gemäß der Erfindung Teil der zyklisch bewegten Formstation und wird folglich mit dieser mitbewegt. Der Haltevakuumkanal hingegen ist zweigeteilt und umfasst zwei ineinander greifende Teleskopkanalabschnitte. Der erste dieser beiden Teleskopkanalabschnitte ist Teil der zyklisch bewegten Formstation und wird damit folglich - ebenso wie die Formvakuumeinrichtung - mit der Formstation zyklisch hin und her bewegt. Der zweite Teleskopkanalabschnitt ist seinerseits ortsfest relativ zum feststehenden Maschinengestell montiert. Hieraus und aus der zyklischen Hin- und Herbewegung der Formstation ergibt sich, dass der erste Teleskopkanalabschnitt unter Aufrechterhaltung einer permanenten Druckübertragung zyklisch mehr oder weniger tief in den feststehenden zweiten Teleskopkanalabschnitt eingreift.

Im erfindungsgemäßen Betrieb wird nun der Transporteur mit den Formatplatten kontinuierlich um das Maschinengestell umlaufend bewegt, wobei die später tiefzuziehende Folienbahn kontinuierlich und synchron zur Bewegung des Transporteurs den Formatplatten zugeführt wird. Zu Beginn eines Tiefziehzyklus wird die Formstation im Bereich ihrer Startposition mit der Bewegung von zumindest einer Formatplatte synchronisiert und läuft dann mit dieser Formatplatte mit. Die hier über eine entsprechende Wärmeeinwirkung plastifizierte Folie wird nun in die Formmulden der Formatplatte tiefgezogen. Dies erfolgt über die mit der Formstation mitbewegte Formvakuumeinrichtung.

Am Ende des Tiefziehvorganges und bei Erreichen der Endposition wird die Formstation zurück zur Startposition bewegt, während sich der Transporteur zusammen mit der Formatplatte und der tiefgezogenen Folienbahn kontinuierlich weiterbewegt. Formatplatte und Formstation bewegen sich also gegenläufig, so dass die Formatplatte nun mit dem ersten, mit der Formstation mitbewegten Teleskopabschnitt des Haltevakuumkanals in Kontakt kommt. Hierdurch wird ein Haltevakuum in die Formmulden der Formatplatte eingebracht und damit die tiefgezogene Folienbahn in den Formmulden gehalten.

Bei Erreichen der Startposition wird die Formstation mit der Bewegung einer nachfolgenden Formatplatte synchronisiert, womit ein neuer Zyklus beginnt. Die zuvor von der Formstation prozessierte Formatplatte mit der darin bereits tiefgezogenen Folie bewegt sich unterdessen kontinuierlich weiter, bis sie den ersten, zyklisch mitbewegten Teleskopkanalabschnitt verlässt und den zweiten, ortsfesten Teleskopkanalabschnitt erreicht. Da beide Teleskopkanalabschnitte Teil des gleichen Haltevakuumkanals sind, bleiben die Formmulden und die darin tiefgezogene Folie kontinuierlich mit dem gleichen Haltevakuum beaufschlagt. Das auf die Folie wirkende Haltevakuum bleibt also beim Übergang vom ersten zum zweiten Teleskopkanalabschnitt kontinuierlich aufrechterhalten, so dass die Folie ebenso kontinuierlich in ihren Formmulden gehalten wird.

Hieraus ergibt sich eine Reihe von Vorteilen. Beim Tiefziehen besteht keine Relativbewegung zwischen der Formvakuumeinrichtung und der Formatplatte. Es ist ein quasi dichtes System ohne nennenswerte Leckageverluste geschaffen. Neben einer verringerten notwendigen Saugleistung ergibt sich die Möglichkeit einer präziseren Steuerung der Vakuumführung. Das Formvakuum kann gezielt nach Ende der Vorheizzeit zugeschaltet werden. Außerdem ergibt sich die Möglichkeit, ein komplexes Druckprofil aufzubringen. Beispielsweise kann die Folie zunächst nach oben an die Heizplatte der Formstation angesaugt werden, was von unten durch Druckluft unterstützt werden kann.

Je nach Bedarf ist es aber auch möglich, ein freies, zunächst druckfreies Aufheizen und Plastifizieren der Folie vorzunehmen. Nach Ende der Aufheizzeit kann dann in der Formstation ein entsprechendes Tiefziehvakuum aufgebracht werden, welches sich in seinem Verlauf frei steuern lässt. Es ist also ein konstantes Tiefziehvakuum ebenso wie ein zeitlich veränderliches Tiefziehvakuum möglich. Optional kann das Tiefziehen noch durch Überdruck von der Oberseite unterstützt werden. Unabhängig davon wird im nachfolgenden Haltevakuumkanal ein geeignetes Haltevakuum aufgebracht, welches je nach Verlauf des Tiefziehvakuums größer, gleich oder kleiner als dieses ist. Nach Beendigung des Tiefziehens jedenfalls tritt die Formatplatte mit dem Haltevakuumkanal in Verbindung und wird aufgrund dessen teleskopischer Ausgestaltung kontinuierlich mit dem Haltevakuum beaufschlagt, und zwar bereits beim Verlassen der zurückfahrenden Formstation. Durch den feststehenden Teleskopkanalabschnitt ist es möglich, das Haltevakuum vom bewegten Teleskopkanalabschnitt zu übernehmen und insbesondere bis hin zu nachfolgenden Bearbeitungsstationen, bevorzugt bis mindestens zur Siegelstation aufrechtzuerhalten. In einer bevorzugten mechanischen Ausgestaltung weisen hierzu die beiden ineinandergreifenden Teleskopkanalabschnitte eine nach oben offene Seite auf, wobei die darüber befindlichen Formatplatten über untere Drucköffnungen mit der genannten offenen Seite der Teleskopkanalabschnitte in Verbindung stehen. Hierdurch ist sichergestellt, dass eine kontinuierliche druckübertragende Verbindung besteht, so dass sich ein ebenso kontinuierliches, schwankungsfreies Haltevakuum an der tiefgezogenen Folie einstellen lässt.

Die Erfindung kommt vollumfänglich insbesondere dann zum Tragen, wenn die Formstation zum Tiefziehen der Folienbahn gleichzeitig in mehrere nacheinander folgende Formatplatten eines Plattensatzes ausgelegt ist. Hierzu umfasst die Formvakuumeinrichtung eine zur Anzahl der Formatplatten eines Plattensatzes korrespondierende Anzahl von Formvakuumkanälen, wobei die einzelnen Formvakuumkanäle mit den einzelnen in der Formstation befindlichen Formatplatten des genannten Plattensatzes in Verbindung stehen und unabhängig voneinander mit Vakuum beaufschlagt werden.

Dies löst das Problem der Über- und Weitergabe der Formatplatten aus der Formstation. Zu Beginn eines Zyklus wird zunächst die Folie über den gesamten Plattensatz thermisch plastifiziert. Anschließend wird der gesamte Plattensatz gleichzeitig mit dem Tiefziehvakuum beaufschlagt, wodurch die plastifizierte Folie in die Formmulden sämtlicher Formatplatten des Plattensatzes tiefgezogen wird. Beim anschließenden Zurückfahren der Formstation werden nun die einzelnen Formatplatten nacheinander mit dem mitbewegten Teleskopkanalabschnitt des Haltevakuumkanals in Verbindung gebracht und hierüber mit dem Haltevakuum beaufschlagt. Nun werden aber ebenso nacheinander neue Formatplatten eines nachfolgenden Plattensatzes von der zurücklaufenden Formstation aufgenommen. Da zu diesem Zeitpunkt aber ein Aufheizen und Plastifizieren der Folie an dieser Stelle noch nicht erfolgt ist, wird das Formvakuum in den Formvakuumkanälen sequenziell, also nacheinander und unabhängig voneinander abgeschaltet. Hierdurch wird ein vorzeitiges Einsaugen der noch kalten Folie in die Formmulden verhindert, während in denjenigen Formatplatten, die sich in der Übergangsphase mit bereits tiefgezogener Folie noch in der zurücklaufenden Formstation befinden, das entsprechende Vakuum aufrechterhalten wird. Erst wenn sich sämtliche zuvor prozessierten Formatplatten im Bereich des teleskopartigen Haltevakuumkanals befinden und ein vollständiger neuer Satz von Formatplatten mit den einzelnen Formvakuumkanälen in Verbindung gebracht ist, erfolgt der Zyklus von Aufheizen und Tiefziehen aufs Neue.

Insgesamt erlaubt die erfindungsgemäße Ausgestaltung damit die gleichzeitige Bearbeitung von mehreren Formatplatten in nur einer Formstation, was außerdem die Möglichkeit einer gleichzeitigen Weiterbehandlung in nachfolgenden Stationen wie in der Füllstation und der Siegelstation nach sich zieht. Hierdurch kann die Ausbringmenge ohne Qualitätsverlust vervielfacht werden.

Ein Ausführungsbeispiel der Erfindung wird nachfolgend anhand der Zeichnung näher beschrieben. Es zeigen:
- Fig. 1: in einer seitlichen Ausschnittsdarstellung eine erfindungsgemäß ausgeführte Verpackungsmaschine mit einem kontinuierlich umlaufend bewegten Transporteur sowie mit zyklisch mitbewegten Form-, Füll- und Siegelstationen,
- Fig. 2: in einer vergrößerten Schnittdarstellung die Formstation nach Fig. 1 mit mehreren gleichzeitig aufgenommenen Formatplatten und mehreren zugehörigen Formvakuumkanälen beim Vorgang des Tiefziehens,
- Fig. 3: in einer Schnittdarstellung die Tiefziehvorrichtung nach Fig. 1 mit der Formstation nach Fig. 2 zu Beginn eines Bearbeitungszyklus beim Synchronisieren mit den kontinuierlich bewegten Formatplatten,
- Fig. 4: die Anordnung nach Fig. 3 beim Tiefziehen während der kontinuierlichen Vorwärtsbewegung der Formatplatten,
- Fig. 5: die Anordnung nach den Fig. 3, 4 mit der Formstation in Endposition bei kontinuierlich weiterbewegten Formatplatten, und
- Fig. 6: die Anordnung nach den Fig. 3 bis 5 beim Zurückfahren der Formstation und bei Übergabe der zuvor prozessierten Formatplatten an einen teleskopartigen Haltevakuumkanal.

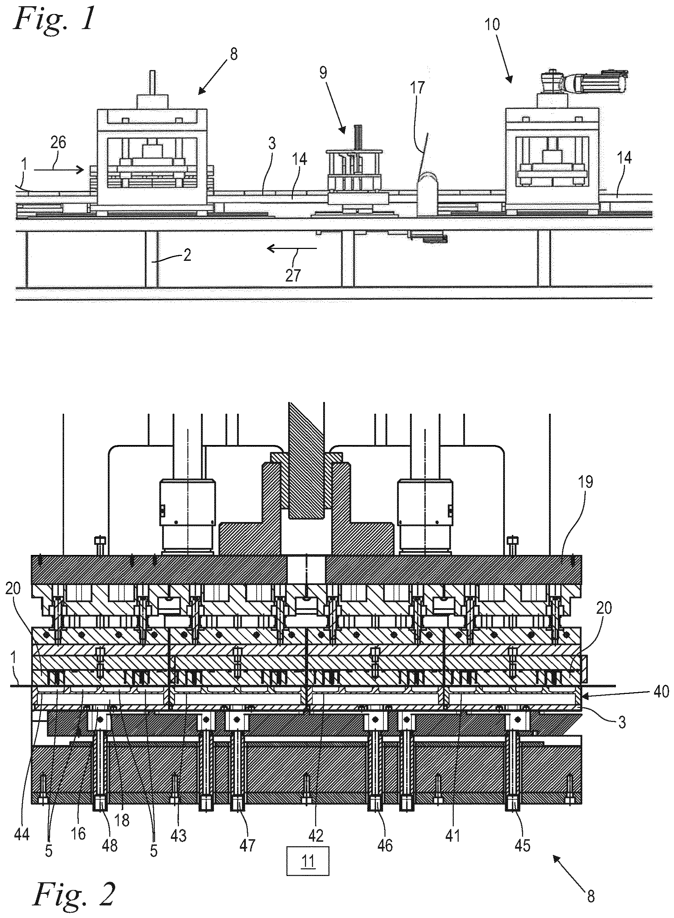

Fig. 1 zeigt in einer Seitenansicht einen Ausschnitt aus einer erfindungsgemäßen Verpackungsmaschine zur Herstellung von gefüllten Beuteln. Hierzu umfasst die Verpackungsmaschine ein Maschinengestell 2, eine Formstation 8, eine Füllstation 9 und eine Siegelstation 10. Eine Folienbahn 1 wird der Verpackungsmaschine zugeführt und in der Formstation 8 tiefgezogen, so dass sich in der Folienbahn 1 Kavitäten ausbilden. Diese Kavitäten werden in der Füllstation 9 mit einem Produkt befüllt. Hieran anschließend wird eine Deckfolie 17 zugeführt und in der Siegelstation 10 auf die Folienbahn 1 aufgesiegelt, wobei die befüllten Kavitäten verschlossen werden. In einer nicht dargestellten Schneidestation wird die solchermaßen gebildete Folieneinheit zu Folienbeuteln vereinzelt. Im Ausführungsbeispiel handelt es sich bei der Folienbahn 1 und bei der Deckfolie 17 um wasserlösliche Folien, namentlich um PVOH-Folien, zwischen denen ein Wasch- oder Reinigungsmittel verpackt wird. Solchermaßen hergestellte gefüllte Folienbeutel werden beispielsweise in eine Spülmaschine eingelegt. Dort löst sich das Folienmaterial bei Wasserkontakt auf und gibt das enthaltene Spülmittel frei. Sinngemäß das Gleiche gilt für den Einsatz eines solchen Folienbeutels in einer Waschmaschine.

Die Verpackungsmaschine umfasst ein ortsfest montiertes Maschinengestell 2 sowie einen kontinuierlich angetriebenen Transporteur 3. Der Transporteur 3 kann ein Förderband oder dergleichen sein und ist im gezeigten Ausführungsbeispiel durch gelenkig und kettenartig miteinander verbundene Elemente gebildet, auf denen weiter unten näher beschriebene Formatplatten 41, 42, 43, 44 (Fig. 2) montiert sind. Letztere werden zusammen mit dem Transporteur 3 kontinuierlich und um das Maschinengestell 2 umlaufend angetrieben, wobei sie sich für den eigentlichen Herstellvorgang der Beutel auf einer oberen horizontalen Bahn entsprechend einem Pfeil 26 bewegen und nach entsprechender Umlenkung anschließend im unteren Bereich des Maschinengestells 2 entsprechend einem Pfeil 27 zurückgeführt werden. Ebenso kontinuierlich wird die endlose Folienbahn 1 zugeführt und von oben auf den Transporteur 3 mit den Formatplatten 41, 42, 43, 44 (Fig. 2) aufgelegt. Zwischen der Füllstation 9 und der Siegelstation 10 wird später noch die Deckfolie 17 kontinuierlich zugeführt und von oben auf die Oberseite der Folienbahn 1 aufgelegt. Die Folienbahn 1 und die Deckfolie 17 werden im aufgelegten Zustand entsprechend dem Pfeil 26 synchron und kontinuierlich mit dem Transporteur 3 mitbewegt.

Die Station zur Zufuhr der Folienbahn 1 sowie die Station zur Zufuhr der Deckfolie 17 sind ortsfest am Maschinengestell 2 montiert, ebenso wie nicht dargestellte Stationen für Wasserauftrag zur Unterstützung des Siegelvorgangs sowie für das Perforieren bzw. seitliche Beschneiden der Folien. Die hier durchgeführten Prozesse arbeiten ebenso wie die Bewegung des Transporteuers 3 kontinuierlich. Anders sieht dies bei der Formstation 8, der Füllstation 9 und der Siegelstation 10 aus. Sie sind nicht ortsfest relativ zum Maschinengestell 2 positioniert, sondern werden abschnittsweise über eine bestimmte Wegstrecke synchron mit dem Transporteur 3 mitgefahren. Währenddessen erfolgt in der Formstation 8 das Tiefziehen der Folienbahn 1, in der Füllstation 9 das Einfüllen des zu verpackenden Produkts in die tiefgezogenen Kavitäten und in der Siegelstation 10 das Aufsiegeln der Deckfolie 17 auf die untere Folienbahn 1. Nach Beendigung des jeweiligen Vorganges werden die Formstation 8, die Füllstation 9 und die Siegelstation 10 zyklisch wieder zurück auf ihre Ausgangsposition verfahren, wo dann ein neuer Zyklus des jeweils ausgeführten Prozesses beginnt.

Fig. 2 zeigt in einer vergrößerten Längsschnittdarstellung einen Ausschnitt aus der Formstation 8 nach Fig. 1. Die Formstation 8 kann dazu ausgelegt sein, nur eine einzelne Formatplatte 41 aufzunehmen und dort die Folienbahn 1 in einem Zyklus tiefzuziehen. Im gezeigten Ausführungsbeispiel ist die Formstation 8 zur gleichzeitigen Aufnahme von mehreren, hier vier aufeinanderfolgenden Formatplatten 41, 42, 43, 44 ausgelegt. Die genannten vier aufeinanderfolgenden Formatplatten 41, 42, 43, 44 bilden zusammen einen Plattensatz 40, wobei die Formstation 8 zyklisch immer einen vollständigen Plattensatz 40 aufnimmt. Dies muss nicht zwingend auch für die nachfolgenden Füll- und Siegelstationen 9, 10 (Fig. 1) gelten. Im gezeigten Ausführungsbeispiel nach Fig. 1 sind jedoch auch die Füllstation 9 und die Siegelstation 10 zur Aufnahme und zyklischen Prozessierung eines kompletten Plattensatzes 40 ausgelegt.

Die einzelnen Formatplatten 41, 42, 43, 44 weisen auf ihrer Oberseite jeweils eine Anzahl von schematisch angedeuteten Formmulden 5 auf und sind auf ihrer gegenüberliegenden Unterseite mit einer Druckkammer 18 versehen. Die Druckkammern 18 der einzelnen Formatplatten 41, 42, 43, 44 sind voneinander getrennt, so dass zwischen ihnen kein selbsttätiger Druckausgleich stattfindet. Allerdings herrscht eine druckübertragende Verbindung zwischen den Druckkammern 18 und den Formmulden 5 innerhalb jeder einzelnen Formatplatte 41, 42, 43, 44 über nicht dargestellte Kapillarbohrungen, so dass die einzelnen Formmulden 5 über die Druckkammern 18 nach Wahl mit Unter- oder Überdruck beaufschlagt werden können. Die Unterdruck- bzw. Vakuumbeaufschlagung geschieht über Formvakuumkanäle 45, 46, 47, 48 als Teil einer nur schematisch angedeuteten Formvakuumeinrichtung 11. Die Formvakuumeinrichtung 11 einschließlich ihrer Formvakuumkanäle 45, 46, 47, 48 ist Teil der zyklisch getakteten Formstation 8 und wird mit dieser mitbewegt. Die einzelnen Drucckammern 18 treten hierbei in druckübertragende Verbindung mit der Formvakuumeinrichtung 11 und können über die einzelnen Formvakuumkanäle 45, 46, 47, 48 unabhängig voneinander mit Unterdruck, insbesondere mit einem Formvakuum beaufschlagt werden, welches sich bis in die jeweiligen Formmulden 5 fortsetzt.

Im Zustand nach Fig. 2 liegt die Folienbahn 1 auf der Oberseite der Formatplatten 41, 42, 43, 44 auf und wird von oben mittels einer Druckplatte 19 niedergedrückt. Mittels der Druckplatte 19 werden Heizplatten 20 von oben an die Folienbahn 1 herangefahren. Unterstützend kann von oben ein Vakuum aufgebracht werden, mittels dessen die Folienbahn 1 zunächst nach oben gegen die Heizplatten 20 gesaugt wird. Zur weiteren Unterstützung kann von unten noch ein Überdruck in die Druckkammern 18 eingebracht werden. Jedenfalls befindet sich zu diesem Zeitpunkt in den Druckkammern 18 noch kein Unterdruck bzw. Vakuum.

Auf die vorstehend beschriebene Weise wird die Folienbahn 1 in der Formstation 8 mittels der Heizplatten 20 zunächst so weit erwärmt, dass eine Plastifizierung bzw. plastische Verformbarkeit eintritt. Die Formvakuumeinrichtung 11 stellt nun für den anstehenden Tiefziehvorgang ein geeignetes Formvakuum bereit. Sobald die gewünschte Zieltemperatur der Folienbahn 1 erreicht ist, werden die Formmulden 5 über die Druckkammern 18 und die Formvakuumkanäle 45, 46, 47, 48 der Formvakuumeinrichtung 11 mit diesem Formvakuum beaufschlagt, welches die Folienbahn 1 in die Formmulden 5 tiefzieht. Hierbei kann ein bestimmtes Formvakuum von einer vorgegebenen konstanten Größe aufgebracht werden. Es kann aber auch zweckmäßig sein, einen bestimmten zeitlichen Verlauf der Intensität des Formvakuums einzuspeisen. Dies beinhaltet auch die Möglichkeit, nach erfolgtem Tiefziehen das Formvakuum auf ein geringeres Haltevakuum in der Formvakuumeinrichtung 11 und damit in den Formmulden 5 abzusenken. Optional kann außerdem von oben ein unterstützender Überdruck auf die Oberseite der Folienbahn 1 aufgebracht werden. All dies ist möglich, weil während des Tiefziehzyklus die Formstation 8 mit dem Plattensatz 40 bzw. mit dem Transporteur 3 synchron mitbewegt wird, also keine Relativbewegung stattfindet.

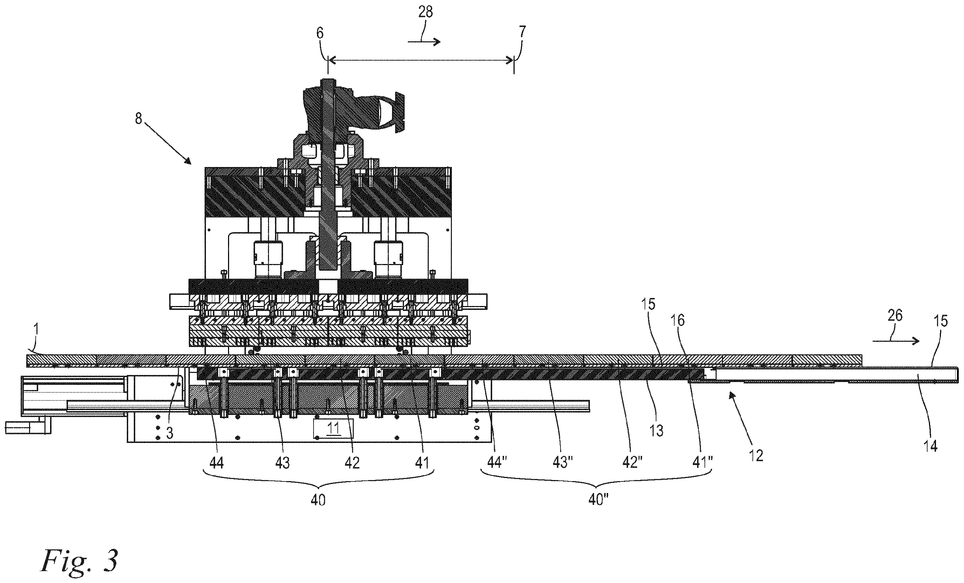

Die Fig. 3 bis 6 zeigen in einer geschnittenen Seitenansicht eine erfindungsgemäß ausgeführte Tiefziehvorrichtung der Verpackungsmaschine nach Fig. 1 mit der Formstation 8 nach Fig. 2. Für eine bessere Übersicht sind hier nur die Formstation 8 sowie ein Abschnitt des Transporteurs 3 mit einigen Formatplatten 41, 42, 43, 44 dargestellt. Dabei ist die gleiche Anordnung in unterschiedlichen Phasen des erfindungsgemäßen Verfahrens dargestellt. Gemäß Fig. 3 befindet sich die bewegliche Formstation 8 in einer initialen Startposition 6, während sich der Transporteur 3 mit den Formatplatten 41, 42, 43, 44 und mit der auflegenden Folienbahn 1 gemäß dem Pfeil 26 kontinuierlich vorwärts bewegt. Ausgehend von der Startposition 6 wird eine Synchronisierung der Bewegung der Formstation 8 mit der kontinuierlichen Bewegung des herankommenden Plattensatzes 40 vorgenommen, welcher gemäß Fig. 3 noch nicht ganz vollständig in die Formstation 8 eingefahren ist. Sobald dies jedoch geschehen ist, wird die Formstation 8 ausgehend von ihrer Startposition 6 entsprechend einem Pfeil 28 synchronisiert mit dem aufgenommenen Plattensatz 40 in Richtung eines Pfeils 28 bis zu einer Endposition 7 mitbewegt.

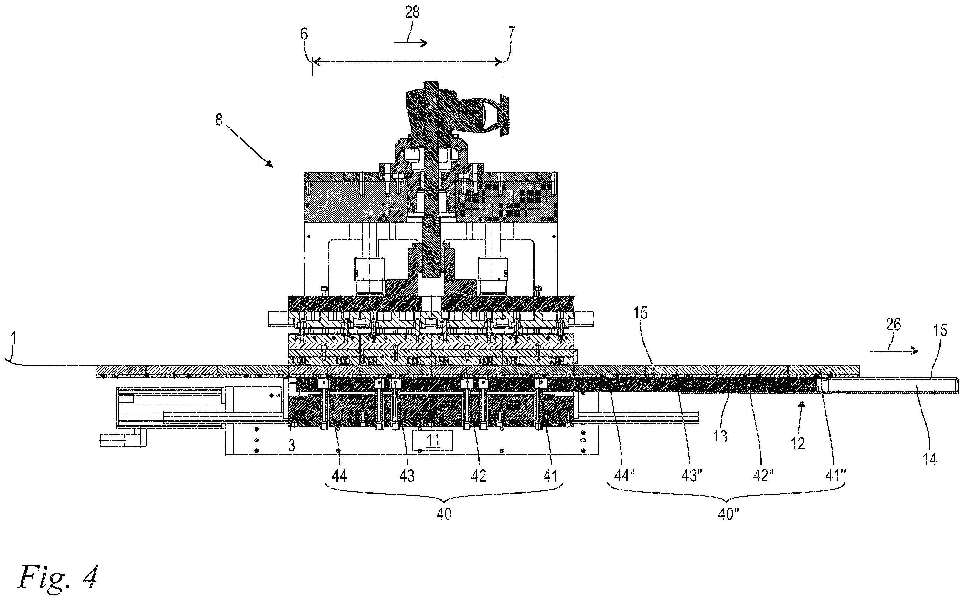

Sobald die Synchronisierung erfolgt ist und der Plattensatz 40 seine vorgesehene Relativposition zur Formstation 8 eingenommen hat, wird der obere Abschnitt der Formstation 8 mit Druckplatte 19 und Heizplatte 20 auf die Folienbahn 1 abgesenkt, wie es in Fig. 2 gezeigt ist. Über Passstifte oder andere geeignete Mittel erfolgt eine exakte Lageausrichtung relativ zu den aufgenommenen Formatplatten 41, 42, 43, 44. Gemäß Fig. 4 bewegt sich die Formstation 8 ausgehend von der Startposition 6 mit dem aufgenommenen Plattensatz 40 bis zur Endposition 7 mit. Während des Mitbewegens erfolgt das im Zusammenhang mit Fig. 2 beschriebene Tiefziehen der Folienbahn 1. Ein zuvor bereits in der Formstation 8 prozessierter Plattensatz 40" mit Formatplatten 41", 42", 43", 44" bewegt sich vor der beschriebenen Anordnung her und wird über einen weiter unten näher beschriebenen Haltevakuumkanal 12 mit einem Haltevakuum beaufschlagt.

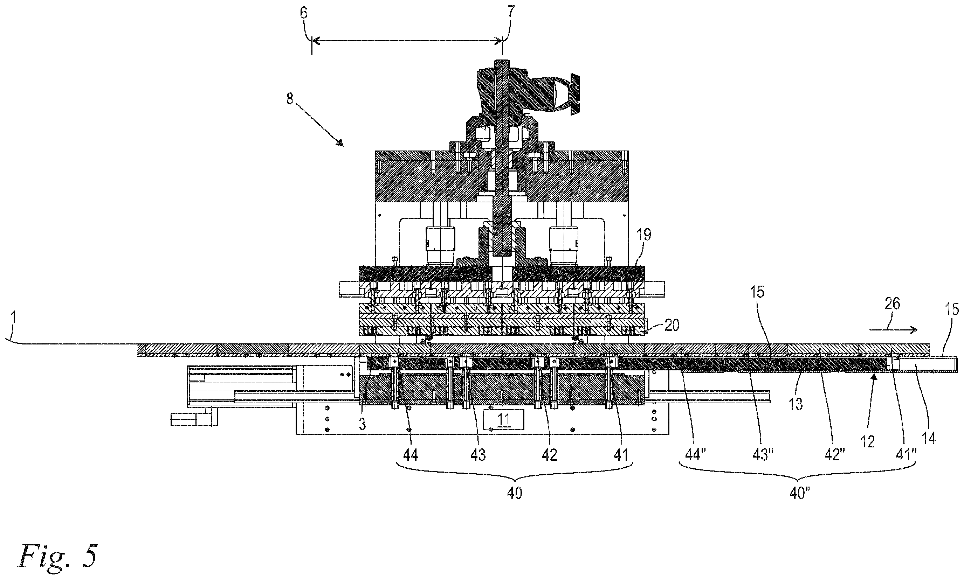

Das Erreichen der Endposition 7 ist in Fig. 5 gezeigt, wobei hier der Tiefziehvorgang abgeschlossen ist. Der obere Abschnitt der Formstation 8 einschließlich der Druckplatte 19 und der Heizplatten 20 wird nun angehoben. Die Vorwärtsbewegung der Formstation 8 endet hier, während sich der Plattensatz 40 mit der darin tiefgezogenen Folienbahn 1 kontinuierlich weiter in Richtung des Pfeiles 26 fortbewegt.

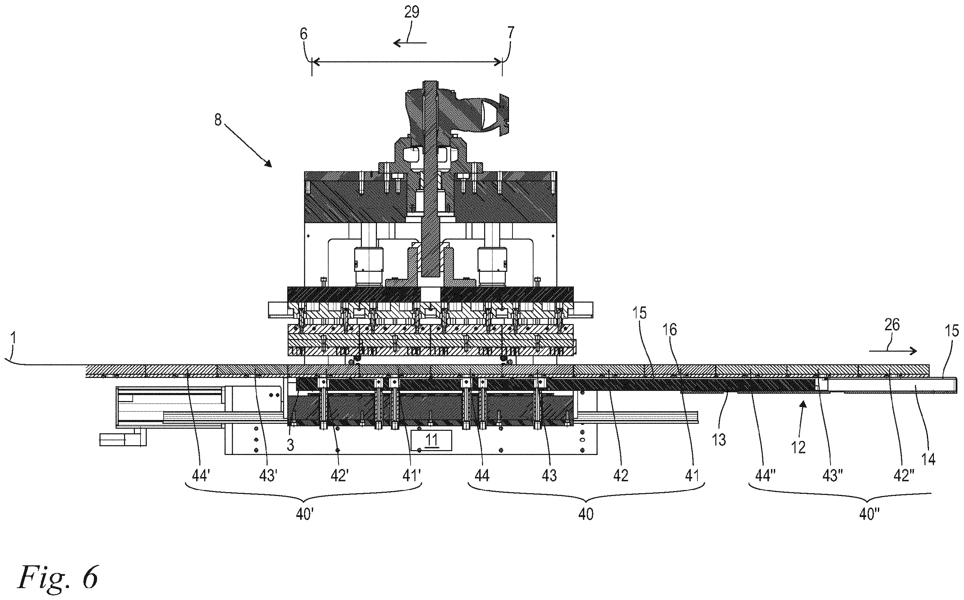

Hiervon ausgehend wird nun die Formstation 8 zurück zur Startposition 6 entsprechend einem Pfeil 29 verfahren, wie es in Fig. 6 dargestellt ist. Währenddessen wird der Transporteur 3 mit dem zuvor prozessierten Plattensatz 40 weiter in Richtung des Pfeiles 26 kontinuierlich bewegt. Gleichzeitig fährt ein nachfolgender Plattensatz 40' mit Formatplatten 41', 42', 43', 44' in die Formstation 8 ein, und es erfolgt ein neuer Zyklus beginnend mit der Synchronisierung nach Fig. 3.

Aus der Zusammenschau der Fig. 3 bis 6 ergibt sich eine weitere Besonderheit der Erfindung, nämlich das Vorhandensein und die Ausgestaltung des bereits erwähnten, der Formvakuumeinrichtung 11 nachgeschalteten Haltevakuumkanals 12. Der Haltevakuumkanal 12 umfasst einen ersten Teleskopkanalabschnitt 13 und einen zweiten Teleskopkanalabschnitt 14. Beide Teleskopkanalabschnitte 13, 14 greifen teleskopartig ineinander, wobei der erste Teleskopkanalabschnitt 13 Teil der zyklisch bewegten Formstation 8 ist und mit dieser zyklisch hin und her bewegt wird. Der zweite Teleskopkanalabschnitt 14 ist ortsfest an dem nur in Fig. 1 dargestellten Maschinengestell 2 montiert. Aus den Phasenbildern der Fig. 3 bis 6 ergibt sich, dass der erste, bewegliche Teleskopkanalabschnitt 13 je nach Position der Formstation 8 mehr oder weniger tief in den zweiten, feststehenden Teleskopkanalabschnitt 14 eingreift. Unabhängig von der Eingriffstiefe stehen beide Teleskopkanalabschnitte 13, 14 ständig in druckübertragender Verbindung miteinander, so dass sie dauerhaft das gleiche Druckniveau in Form eines Haltevakuums aufweisen. Außerdem weisen beide Teleskopkanalabschnitte 13, 14 eine nach oben offene Seite 15 auf, durch welche die darüber befindlichen Formatplatten durch deren zugewandte unteren Drucköffnungen 16 mit dem Haltevakuum beaufschlagt werden.

Die Funktion des teleskopartigen Haltevakuumkanals 12 ist dabei in den verschiedenen Phasen der Fig. 3 bis 6 wie folgt: Während des Tiefziehens der Folienbahn 1 in einen Plattensatz 40 nach den Fig. 4 und 5 befindet sich ein zuvor in gleicher Weise prozessierter Plattensatz 40" über dem Haltevakuumkanal 12, wobei die zugehörigen Formmulden 5 (Fig. 2) mit der darin tiefgezogenen Folienbahn 1 durch die unteren Drucköffnungen 16 und die daran angrenzende offene Seite 15 mit einem Haltevakuum beaufschlagt sind. Während ihrer kontinuierlichen Vorwärtsbewegung stehen die zugehörigen Formatplatten 41", 42", 43", 44" zunächst mit dem ersten Teleskopkanalabschnitt 13 und dann mit dem feststehenden zweiten Teleskopkanalabschnitt 14 in Verbindung. Der zweite, feststehende Teleskopkanalabschnitt 14 erstreckt sich gemäß Fig. 1 zumindest bis zur Siegelstation 10 und einschließlich dieser, so dass zumindest bis hier und während des Siegelvorganges die tiefgezogene Folienbahn 1 mittels des aufgebrachten Haltevakuums in ihren Formmulden 5 (Fig. 2) gehalten wird.

Sobald nun ausgehend hiervon die Formstation 8 gemäß Fig. 6 rückwärts verfahren wird, rücken die soeben hierin prozessierten Formatplatten 41, 42, 43, 44 des Plattensatzes 40 sukzessive zum ersten, mitbewegten Teleskopkanalabschnitt 13 und von dort zum zweiten, feststehenden Teleskopkanalabschnitt 14 vor. Zunächst bewegt sich die erste Formatplatte 41 von ihrem zugeordneten Formvakuumkanal 45 (Fig. 2) zum ersten, mitbewegten Teleskopkanalabschnitt 13 und tritt mit diesem in Vakuumverbindung. Später rückt sie zum zweiten, ortsfesten Teleskopkanalabschnitt 14 vor, wobei infolge dessen teleskopartiger Ausgestaltung das Haltevakuum aufrechterhalten wird. Die unmittelbar nachfolgende Formatplatte 42 verlässt zunächst ihren zugeordneten Formvakuumkanal 46 (Fig. 2) und überstreicht dann den vorderen Formvakuumkanal 45, worüber weiterhin ein Vakuum in ihren Formmulden 5 (Fig. 2) aufrechterhalten wird. Anschließend erreicht auch die zweite Formatplatte 45 den Hauptvakuumkanal 12. Sinngemäß das Gleiche gilt für die übrigen Formatplatten 43, 44 des gleichen Plattensatzes 40: Sie verlassen zunächst ihre zugeordneten Formvakuumkanäle 47, 48 und überstreichen dann nacheinander die Formvakuumkanäle 47, 46, 45, worüber weiterhin ein Vakuum in ihren Formmulden 5 (Fig. 2) aufrechterhalten wird. Schließlich erreicht auch die hinterste Formatplatte 44 den Hauptvakuumkanal 12 und wird über diesen mit Haltevakuum versorgt.

Gemäß Fig. 6 folgt nun dem austretenden Plattensatz 40 ein nachfolgender Plattensatz 40' mit Formatplatten 41', 42', 43', 44' nach und fährt in die Formstation 8 ein. Synchron mit dem Einfahren wird nacheinander, also sequenziell und unabhängig voneinander das zuvor herrschende Vakuum in den Formvakuumkanälen 48, 47, 46, 45 abgeschaltet, und zwar beginnend beim Formvakuumkanal 48 und endend beim Formvakuumkanal 45 in der Weise, dass die Formatplatten 41, 42, 43, 44 mit tiefgezogener Folienbahn 1 weiterhin mit Vakuum beaufschlagt bleiben, während nachfolgend einfahrende Formatplatten 41', 42', 43', 44' mit noch nicht tiefgezogener Folienbahn 1 sequenziell die Position ihrer Vorgänger, also der Formatplatten 41, 42, 43, 44 einnehmen, ohne jedoch zu diesem Zeitpunkt eine Vakuumbeaufschlagung zu erfahren. Durch die sequentielle Abschaltung wird erreicht, dass die an dieser Stelle noch nicht aufgeheizte bzw. noch nicht tiefgezogene Folienbahn 1 vorzeitig in die Formmulden eingesogen wird. Die erneute Vakuumbeaufschlagung erfolgt erst nach Abschluss der erneuten Synchronisation und Aufheizung gemäß der Fig. 3, 4.

## Patentansprüche

1. Tiefziehvorrichtung zum Tiefziehen einer kontinuierlich zugeführten Folienbahn (1), umfassend einen kontinuierlich um ein feststehendes Maschinengestell (2) umlaufenden Transporteur (3) mit Formatplatten (41, 42, 43, 44) und mit in den Formatplatten (41, 42, 43, 44) befindlichen Formmulden (5), des Weiteren umfassend eine zyklisch getaktete, von einer Startposition (6) zu einer Endposition (7) mit dem Transporteur mitlaufende und von dort zur Startposition (6) zurücklaufende Formstation (8), wobei die einzelnen Formatplatten (41, 42, 43, 44) sequentiell zunächst mit einer Formvakuumeinrichtung (11) und dann mit einem nachfolgenden Haltevakuumkanal (12) in Verbindung bringbar sind,
**dadurch gekennzeichnet, dass** die Formvakuumeinrichtung (11) Teil der zyklisch bewegten Formstation (8) ist, und dass der Haltevakuumkanal (12) zwei ineinandergreifende Teleskopkanalabschnitte (13, 14) umfasst, wobei ein erster Teleskopkanalabschnitt (13) Teil der zyklisch bewegten Formstation (8) ist, und wobei ein zweiter Teleskopkanalabschnitt (14) ortsfest relativ zum feststehenden Maschinengestell (2) montiert ist.

2. Tiefziehvorrichtung nach Anspruch 1,
**dadurch gekennzeichnet, dass** die Formstation (8) zum Tiefziehen der Folienbahn (1) gleichzeitig in mehreren aufeinanderfolgenden Formatplatten (41, 42, 43, 44) eines Plattensatzes (40) ausgelegt ist, und dass die Formvakuumeinrichtung (11) eine zur Anzahl der Formatplatten (41, 42, 43, 44) eines Plattensatzes (40) korrespondierende Anzahl von Formvakuumkanälen (45, 46, 47, 48) umfasst, wobei die einzelnen Formvakuumkanäle (45, 46, 47, 48) mit den einzelnen in der Formstation (8) befindlichen Formatplatten (41, 42, 43, 44) des Plattensatzes (40) in Verbindung stehen und unabhängig voneinander mit Vakuum beaufschlagbar sind.

3. Tiefziehvorrichtung nach Anspruch 1 oder 2,
**dadurch gekennzeichnet, dass** die beiden ineinandergreifenden Teleskopkanalabschnitte (13, 14) eine nach oben offene Seite (15) aufweisen, wobei die darüber befindlichen Formatplatten (41, 42, 43, 44) über untere Drucköffnungen (16) mit der offenen Seite (15) der Teleskopkanalabschnitte (13, 14) in Verbindung stehen.

4. Tiefziehvorrichtung nach einem der Ansprüche 1 bis 3,
**dadurch gekennzeichnet, dass** die Formvakuumeinrichtung (11) und der Haltevakuumkanal (12) mit unterschiedlichem Vakuumniveau beaufschlagbar sind.

5. Verpackungsmaschine zur Herstellung von gefüllten Beuteln, umfassend eine Tiefziehvorrichtung nach einem der Ansprüche 1 bis 4, des Weiteren umfassend nachfolgende Bearbeitungsstationen, insbesondere eine Füllstation (9) und eine Siegelstation (10).

6. Verpackungsmaschine nach Anspruch 5,
**dadurch gekennzeichnet, dass** sich der zweite, ortsfeste Teleskopkanalabschnitt (14) bis zu mindestens einer der Formstation (8) nachfolgenden Bearbeitungsstation und insbesondere bis mindestens zur Siegelstation (10) erstreckt.

7. Verfahren zum Betrieb einer Tiefziehvorrichtung nach einem der Ansprüche 1 bis 4, umfassend folgende Verfahrensschritte:
- Ein Transporteur (3) mit Formatplatten (41, 42, 43, 44) wird kontinuierlich um ein Maschinengestell (2) umlaufend bewegt, wobei eine Folienbahn (1) kontinuierlich und synchron zur Bewegung des Transporteurs (3) den Formatplatten (41, 42, 43, 44) zugeführt wird;
- Zu Beginn eines Zyklus wird eine Formstation (8) im Bereich einer Startposition (6) mit der Bewegung einer Formatplatte (41, 42, 43, 44) synchronisiert und läuft dann mit der Formatplatte (41, 42, 43, 44) mit;
- Über eine mitbewegte Formvakuumeinrichtung (11) als Teil der Formstation (8) wird ein Formvakuum in die Formmulden (5) der Formatplatte (41, 42, 43, 44) eingebracht und damit die Folienbahn (1) in die Formmulden (5) tiefgezogen;
- Am Ende des Tiefziehvorgangs und bei Erreichen einer Endposition (7) wird die Formstation (8) zurück zur Startposition (6) bewegt, während sich der Transporteur (3) zusammen mit der Formatplatte (41, 42, 43, 44) und der tiefgezogenen Folienbahn (1) weiter bewegt, wobei über einen ersten, mit der Formstation mitbewegten Teleskopkanalabschnitt (13) des Haltevakuumkanals (12) ein Haltevakuum in die Formmulden (5) der Formatplatte (41, 42, 43, 44) eingebracht und damit die tiefgezogene Folienbahn (1) in den Formmulden (5) gehalten wird;
- Bei Erreichen der Startposition (6) wird die Formstation (8) mit der Bewegung einer nachfolgenden Formatplatte (41', 42', 43', 44') synchronisiert, womit ein neuer Zyklus beginnt;
- Im weiteren Verlauf der kontinuierlichen Weiterbewegung der Formatplatte (41, 42, 43, 44) mit der tiefgezogenen Folienbahn (1) wird über einen zweiten, ortsfest relativ zum feststehenden Maschinengestell (2) montierten Teleskopkanalabschnitt (14) des Haltevakuumkanals (12) das Haltevakuum in den Formmulden (5) der Formatplatte (41, 42, 43, 44) aufrechterhalten und damit die tiefgezogene Folienbahn (1) in den Formmulden (5) gehalten.

8. Verfahren nach Anspruch 7, umfassend folgende Verfahrensschritte:
- in der Formstation (8) wird die Folienbahn (1) in mehreren aufeinanderfolgenden Formatplatten (41, 42, 43, 44) eines Plattensatzes (40) gleichzeitig tiefgezogen, wobei über eine zur Anzahl der Formatplatten (41, 42, 43, 44) des Plattensatzes (40) korrespondierende Anzahl von Formvakuumkanälen (45, 46, 47, 48) ein Formvakuum in die Formmulden (5) eingebracht und damit die Folienbahn (1) in die Formmulden (5) tiefgezogen wird;
- beim Zurückfahren der Formstation werden die Formatplatten (41, 42, 43, 44) des Plattensatzes (40) nacheinander mit dem mitbewegten Teleskopkanalabschnitt (13) des Haltevakuumkanals (12) in Verbindung gebracht und hierüber mit dem Haltevakuum beaufschlagt, während das Formvakuum in den Formvakuumkanälen (45, 46, 47, 48) bei Ankunft von Formatplatten (41', 42', 43', 44') eines nachfolgenden Plattensatzes (40') sequentiell und unabhängig voneinander abgeschaltet wird.

9. Verfahren nach Anspruch 7 oder 8,
**dadurch gekennzeichnet, dass** nachfolgend zur Formstation (8) mindestens eine weitere Bearbeitungsstation, insbesondere eine Füllstation (9) und eine Siegelstation (10) angeordnet sind, und dass das Haltevakuum über den ortsfesten Teleskopkanalabschnitt (14) bis zu der mindestens einen nachfolgenden Bearbeitungsstation und insbesondere bis mindestens zur Siegelstation (10) aufrechterhalten wird.

10. Verfahren nach einem der Ansprüche 7 bis 9,
**dadurch gekennzeichnet, dass** die Formmulden (5) der Formatplatte (41, 42, 43, 44) über die Formvakuumeinrichtung (11) und über den Haltevakuumkanal (12) mit unterschiedlichem Vakuumniveau beaufschlagt werden, wobei insbesondere das Formvakuum höher ist als das Haltevakuum.

## Claims

1. Deep-drawing apparatus for deep drawing a continuously fed film web (1), comprising a conveyor (3), which revolves continuously around a stationary machine frame (2), has format plates (41, 42, 43, 44), and has mould impressions (5) located in the format plates (41, 42, 43, 44), further comprising a cyclically synchronized moulding station (8), which runs along with the conveyor from a start position (6) to an end position (7) and runs back from there to the start position (6), wherein the individual format plates (41, 42, 43, 44) can be connected in sequence firstly to a moulding-vacuum device (11) and then to a downstream holding-vacuum channel (12), **characterized in that** the moulding-vacuum device (11) is part of the cyclically moved moulding station (8), and **in that** the holding-vacuum channel (12) comprises two interlocking telescopic channel portions (13, 14), wherein a first telescopic channel portion (13) is part of the cyclically moved moulding station (8), and wherein a second telescopic channel portion (14) is mounted positionally fixedly relative to the stationary machine frame (2).

2. Deep-drawing apparatus according to Claim 1,
**characterized in that** the moulding station (8) is designed to deep draw the film web (1) simultaneously into a plurality of successive format plates (41, 42, 43, 44) of a plate set (40), and **in that** the moulding-vacuum device (11) comprises a number of moulding-vacuum channels (45, 46, 47, 48) that corresponds to the number of format plates (41, 42, 43, 44) of a plate set (40), wherein the individual moulding-vacuum channels (45, 46, 47, 48) are connected to the individual format plates (41, 42, 43, 44) of the plate set (40) located in the moulding station (8) and can have a vacuum applied to them independently of one another.

3. Deep-drawing apparatus according to Claim 1 or 2,
**characterized in that** the two interlocking telescopic channel portions (13, 14) have an upwardly open side (15), wherein the format plates (41, 42, 43, 44) located thereabove are connected to the open side (15) of the telescopic channel portions (13, 14) via lower pressure-exerting openings (16).

4. Deep-drawing apparatus according to one of Claims 1 to 3,
**characterized in that** the moulding-vacuum device (11) and the holding-vacuum channel (12) can have different levels of vacuum applied to them.

5. Packaging machine for producing filled bags, comprising a deep-drawing apparatus according to one of Claims 1 to 4, further comprising downstream processing stations, in particular a filling station (9) and a sealing station (10).

6. Packaging machine according to Claim 5,
**characterized in that** the second, positionally fixed telescopic channel portion (14) extends as far as at least one processing station downstream of the moulding station (8) and in particular at least as far as the sealing station (10).

7. Method for operating a deep-drawing apparatus according to one of Claims 1 to 4, comprising the following method steps:
- a conveyor (3) having format plates (41, 42, 43, 44) is moved continuously in revolutions around a machine frame (2), wherein a film web (1) is fed to the format plates (41, 42, 43, 44) continuously and synchronously with the movement of the conveyor (3);
- at the beginning of a cycle, a moulding station (8) in the region of a start position (6) is synchronized with the movement of a format plate (41, 42, 43, 44) and then runs along with the format plate (41, 42, 43, 44);
- via a jointly moved moulding-vacuum device (11) as part of the moulding station (8), a moulding vacuum is introduced into the mould impressions (5) of the format plate (41, 42, 43, 44), and hence the film web (1) is deep drawn into the mould impressions (5);
- at the end of the deep-drawing operation and when an end position (7) is reached, the moulding station (8) is moved back to the start position (6), while the conveyor (3) moves onwards together with the format plate (41, 42, 43, 44) and the deep-drawn film web (1), wherein, via a first telescopic channel portion (13), moved jointly with the moulding station, of the holding-vacuum channel (12), a holding vacuum is introduced into the mould impressions (5) of the format plate (41, 42, 43, 44), and hence the deep-drawn film web (1) is held in the mould impressions (5);
- when the start position (6) is reached, the moulding station (8) is synchronized with the movement of a following format plate (41', 42', 43', 44'), whereby a new cycle begins;
- in the further course of the continuous onwards movement of the format plate (41, 42, 43, 44) with the deep-drawn film web (1), via a second telescopic channel portion (14), mounted positionally fixedly relative to the stationary machine frame (2), of the holding-vacuum channel (12) the holding vacuum in the mould impressions (5) of the format plate (41, 42, 43, 44) is maintained, and hence the deep-drawn film web (1) is held in the mould impressions (5).

8. Method according to Claim 7, comprising the following method steps:
- in the moulding station (8), the film web (1) is deep drawn simultaneously in a plurality of successive format plates (41, 42, 43, 44) of a plate set (40), wherein, via a number of moulding-vacuum channels (45, 46, 47, 48) that corresponds to the number of format plates (41, 42, 43, 44) of the plate set (40), a moulding vacuum is introduced into the mould impressions (5), and hence the film web (1) is deep drawn into the mould impressions (5);
- in the course of the return travel of the moulding station, the format plates (41, 42, 43, 44) of the plate set (40) are connected one after the other to the jointly moved telescopic channel portion (13) of the holding-vacuum channel (12) and hereby have the holding vacuum applied to them, while, upon the arrival of format plates (41', 42', 43', 44') of a following plate set (40'), the moulding vacuums in the moulding-vacuum channels (45, 46, 47, 48) are switched off sequentially and independently of one another.

9. Method according to Claim 7 or 8,
**characterized in that** at least one further processing station, in particular a filling station (9) and a sealing station (10), are arranged downstream of the moulding station (8), and **in that** the holding vacuum is maintained over the positionally fixed telescopic channel portion (14) as far as the at least one downstream processing station and in particular at least as far as the sealing station (10).

10. Method according to one of Claims 7 to 9,
**characterized in that** the mould impressions (5) of the format plate (41, 42, 43, 44) have a different level of vacuum applied to them via the moulding-vacuum device (11) and via the holding-vacuum channel (12), wherein in particular the moulding vacuum is higher than the holding vacuum.

## Revendications

1. Dispositif d'emboutissage servant à l'emboutissage d'une bande de film (1) acheminée en continu, comportant un transporteur (3) tournant en continu autour d'un bâti de machine (2) fixe, lequel transporteur est doté de plaques de format (41, 42, 43, 44) et de cavités de formage (5) se trouvant dans les plaques de format (41, 42, 43, 44), comportant en outre une station de formage (8) cadencée de manière cyclique, se déplaçant avec le transporteur à partir d'une position de départ (6) jusqu'à une position finale (7) et revenant, à partir de là, à la position de départ (6), les plaques de format (41, 42, 43, 44) individuelles pouvant être amenées en liaison séquentiellement tout d'abord avec un dispositif de vide de formage (11) et ensuite avec un canal de vide de retenue (12) suivant,
**caractérisé en ce que** le dispositif de vide de formage (11) fait partie de la station de formage (8) déplacée cycliquement, et **en ce que** le canal de vide de retenue (12) comporte deux parties de canal télescopiques (13, 14) venant en prise l'une dans l'autre, une première partie de canal télescopique (13) faisant partie de la station de formage (8) déplacée cycliquement, et une deuxième partie de canal télescopique (14) étant montée de manière stationnaire par rapport au bâti de machine (2) fixe.

2. Dispositif d'emboutissage selon la revendication 1,
**caractérisé en ce que** la station de formage (8) est configurée pour l'emboutissage de la bande de film (1) simultanément dans plusieurs plaques de format (41, 42, 43, 44) successives d'un groupe de plaques (40), et **en ce que** le dispositif de vide de formage (11) comporte un nombre de canaux de vide de formage (45, 46, 47, 48) correspondant au nombre de plaques de format (41, 42, 43, 44) d'un groupe de plaques (40), les canaux de vide de formage (45, 46, 47, 48) individuels étant en liaison avec les plaques de format (41, 42, 43, 44) individuelles, se trouvant dans la station de formage (8), du groupe de plaques (40) et pouvant être soumis au vide indépendamment les uns des autres.

3. Dispositif d'emboutissage selon la revendication 1 ou 2,
**caractérisé en ce que** les deux parties de canal télescopiques (13, 14) venant en prise l'une dans l'autre présentent un côté (15) ouvert vers le haut, les plaques de format (41, 42, 43, 44) se trouvant au-dessus de celui-ci étant en liaison avec le côté ouvert (15) des parties de canal télescopiques (13, 14) par le biais d'ouvertures de pression (16) inférieures.

4. Dispositif d'emboutissage selon l'une des revendications 1 à 3,
**caractérisé en ce que** le dispositif de vide de formage (11) et le canal de vide de retenue (12) peuvent être soumis à un niveau de vide différent.

5. Machine d'emballage servant à la fabrication de sachets remplis, comportant un dispositif d'emboutissage selon l'une des revendications 1 à 4, comportant en outre des stations de traitement suivantes, en particulier une station de remplissage (9) et une station de scellage (10).

6. Machine d'emballage selon la revendication 5,
**caractérisée en ce que** la deuxième partie de canal télescopique (14) stationnaire s'étend jusqu'à au moins une station de traitement suivant la station de formage (8) et en particulier au moins jusqu'à la station de scellage (10).

7. Procédé de fonctionnement d'un dispositif d'emboutissage selon l'une des revendications 1 à 4, comportant les étapes de procédé suivantes :
- un transporteur (3) doté de plaques de format (41, 42, 43, 44) est déplacé de manière à tourner en continu autour d'un bâti de machine (2), une bande de film (1) étant acheminée aux plaques de format (41, 42, 43, 44) en continu et de manière synchrone par rapport au déplacement du transporteur (3) ;
- au début d'un cycle, une station de formage (8) est synchronisée avec le déplacement d'une plaque de format (41, 42, 43, 44) dans la région d'une position de départ (6) et se déplace ensuite avec la plaque de format (41, 42, 43, 44);
- par le biais d'un dispositif de vide de formage (11) déplacé conjointement en tant que partie de la station de formage (8), un vide de formage est appliqué dans les cavités de formage (5) de la plaque de formage (41, 42, 43, 44) et par conséquent la bande de film (1) est emboutie dans les cavités de formage (5) ;
- à la fin de l'opération d'emboutissage et lorsqu'une position finale (7) est atteinte, la station de formage (8) est ramenée à la position de départ (6), pendant que le transporteur (3) continue à se déplacer conjointement avec la plaque de format (41, 42, 43, 44) et la bande de film (1) emboutie, un vide de retenue étant appliqué dans les cavités de formage (5) de la plaque de format (41, 42, 43, 44) par le biais d'une première partie de canal télescopique (13), déplacée conjointement avec la station de formage, du canal de vide de retenue (12) et par conséquent la bande de film (1) emboutie étant retenue dans les cavités de formage (5) ;
- lorsque la position de départ (6) est atteinte, la station de formage (8) est synchronisée avec le déplacement d'une plaque de format (41', 42', 43', 44') suivante, moyennant quoi un nouveau cycle commence ;
- au cours du déplacement ultérieur continu de la plaque de format (41, 42, 43, 44) avec la bande de film (1) emboutie, le vide de retenue est maintenu dans les cavités de formage (5) de la plaque de format (41, 42, 43, 44) par le biais d'une deuxième partie de canal télescopique (14), montée de manière stationnaire par rapport au bâti de machine (2) fixe, du canal de vide de retenue (12) et par conséquent la bande de film (1) emboutie est retenue dans les cavités de formage (5).

8. Procédé selon la revendication 7, comportant les étapes de procédé suivantes :
- dans la station de formage (8), la bande de film (1) est emboutie simultanément dans plusieurs plaques de format (41, 42, 43, 44) successives d'un groupe de plaques (40), par le biais d'un nombre de canaux de vide de formage (45, 46, 47, 48) correspondant au nombre de plaques de format (41, 42, 43, 44) du groupe de plaques (40), un vide de formage étant appliqué dans les cavités de formage (5) et par conséquent la bande de film (1) étant emboutie dans les cavités de formage (5) ;
- lors du retour en arrière de la station de formage, les plaques de format (41, 42, 43, 44) du groupe de plaques (40) sont amenées en liaison les unes après les autres avec la partie de canal télescopique (13) déplacée conjointement du canal de vide de retenue (12) et ainsi soumises au vide de retenue, tandis que les vides de formage dans les canaux de vide de formage (45, 46, 47, 48), à l'arrivée de plaques de format (41', 42', 43', 44') d'un groupe de plaques (40') suivant, sont déconnectés séquentiellement et indépendamment les uns des autres.

9. Procédé selon la revendication 7 ou 8,
**caractérisé en ce qu'**au moins une autre station de traitement, en particulier une station de remplissage (9) et une station de scellage (10), sont disposées à la suite de la station de formage (8), et **en ce que** le vide de retenue est maintenu sur la partie de canal télescopique (14) stationnaire jusqu'à l'au moins une station de traitement suivante et en particulier au moins jusqu'à la station de scellage (10).

10. Procédé selon l'une des revendications 7 à 9,
**caractérisé en ce que** les cavités de formage (5) de la plaque de format (41, 42, 43, 44) sont soumises à un niveau de vide différent par le biais du dispositif de vide de formage (11) et par le biais du canal de vide de retenue (12), le vide de formage étant en particulier supérieur au vide de retenue.
